# NOUVEAU FASCICULE DE BREVET EUROPEEN

(11) **EP 0 456 575 B2**
(45) Date de publication et mention de la décision concernant l'opposition: **15.09.1999**
(45) Mention de la délivrance du brevet: 01.02.1995
(21) Numéro de dépôt: 91401198.6
(22) Date de dépôt: 07.05.1991
(51) Int. Cl.: F25J 3/04

(54) **Procédé et appareil d'épuration par adsorption d'air destiné â être distillé**
Verfahren und Apparat zur Adsorptionsreinigung von zu destillierender Luft
Process and apparatus for purifying, by adsorption, air to be distilled

(30) Priorité: 09.05.1990 FR 9005779
(43) Date de publication de la demande: 13.11.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Grenier, Maurice, F-75018 Paris (FR); Gastinne, Sophie, F-76330 Notre Dame de Gravenchon (FR); Petit, Pierre, F-92290 Chatenay Malabry (FR); Venet, François, F-75017 Paris (FR)

(56) Documents cités:
- EP-A- 0 044 679
- DE-A- 2 532 099
- DE-A- 3 702 190
- DE-A- 3 732 364
- DE-A- 3 814 187
- FR-A- 2 198 108
- FR-A- 2 363 069
- US-A- 4 746 343

## Description

La présente invention est relative à un procédé de dessiccation-décarbonatation d'air atmosphérique par adsorption avant son entrée dans la boîte froide d'une installation de distillation d'air, du type dans lequel l'air comprimé est refroidi à une température d'adsorption et épuré par adsorption par passage dans un premier sens à travers une masse d'adsorbant, un gaz résiduaire de l'installation de distillation, à une température de régénération, traversant ensuite la masse d'adsorbeur en sens opposé pour la régénérer, après quoi la masse d'adsorbant est remise en phase d'adsorption. Un tel procédé dans lequel la température est sensiblement égale à la température de l'air sortant de la masse d'adsorbant est connu du document DE-A-3702190.

Dans les installations actuelles de distillation d'air, l'air atmosphérique comprimé est, avant son entrée dans la boîte froide, desséché et décarbonaté (épuration en eau et en CO₂) par adsorption sélective, par passage à travers une masse d'adsorbant appropriée, par exemple à simple lit de tamis moléculaire ou à double lit (de préférence un lit d'alumine suivi d'un lit de tamis moléculaire).

On utilise pour cela deux masses d'adsorbant en parallèle, dont l'une est active pendant que l'autre est régénérée à contre-courant, c'est-à-dire dans le sens inverse de la circulation de l'air pendant la phase d'adsorption.

Pour effectuer la régénération, on utilise un gaz résiduaire de l'installation, qui est disponible avec un débit de l'ordre de 15 à 70 % du débit d'air entrant. Ce gaz résiduaire est de l'azote impur dans le cas des installations de production d'oxygène, et du liquide riche vaporisé (air enrichi en oxygène) pour les installations de production d'azote.

Suivant la technique habituelle, dans une première étape de régénération, le gaz résiduaire est chauffé à température relativement haute, de l'ordre de 100 à 350°C, et crée un front de chaleur qui traverse entièrement la masse d'adsorbant. L'adsorbant ayant des propriétés d'adsorption très réduites à cette température, il est nécessaire de le refroidir avant de le remettre en phase d'adsorption, pour éviter l'envoi dans la boîte froide d'une onde de chaleur.

C'est pourquoi il est nécessaire que la phase de régénération comprenne une étape finale de refroidissement de l'adsorbant au cours de laquelle le gaz résiduaire non chauffé, et donc au voisinage de la température ambiante, circule à contre-courant à travers cet adsorbant.

Cette technique, décrite dans le document DE-A-25.32.099, très largement adoptée à l'heure actuelle, présente de sérieux inconvénients. En particulier :
- on ne peut se dispenser de l'étape de refroidissement, ce qui complique l'installation et sa conduite, alors que cette étape n'a aucune utilité du point de vue de la régénération de l'adsorbant ;
- il faut prévoir une puissance électrique installée qui n'est utilisée que pendant une partie du temps ;
- la régénération à haute température provoque des pertes de chaleur près des parois des adsorbeurs ; par suite, une isolation thermique est nécessaire pour obtenir une régénération uniforme dans la masse de l'adsorbant, et également pour la protection du personnel.

L'invention a pour but d'éliminer ces inconvénients, en particulier dans le cas de petits appareils de production d'oxygène et/ou d'azote, notamment gazeux.

A cet effet, l'invention a pour objet un procédé selon la revendication 1.

Selon un aspect de l'invention, la différence entre la température de régénération et la température d'adsorption est typiquement de l'ordre de 10 à 20°C, la température d'adsorption étant comprise entre 5 et 20°C, typiquement d'environ 10°C.

Suivant d'autres caractéristiques :
- l'air épuré est réchauffé jusqu'à une température légèrement supérieure à la température de régénération avant son entrée dans la boîte froide ;
- le réchauffage est réalisé par échange de chaleur avec l'air sortant du compresseur de l'installation, éventuellement pré-refroidi ;
- le réchauffage est réalisé par surpression, l'énergie de surpression étant notamment fournie par une turbine de production frigorifique de l'installation ;
- après son refroidissement, l'air comprimé partiellement épuré de son eau par ce refroidissement est réchauffé, de préférence partiellement, avant son entrée dans la masse d'adsorbant ;
- le gaz résiduaire est réchauffé, de préférence par échange de chaleur avec l'air sortant du compresseur, avant son entrée dans la masse d'adsorbant.

L'invention a également pour objet des appareils selon les revendications 7-10.

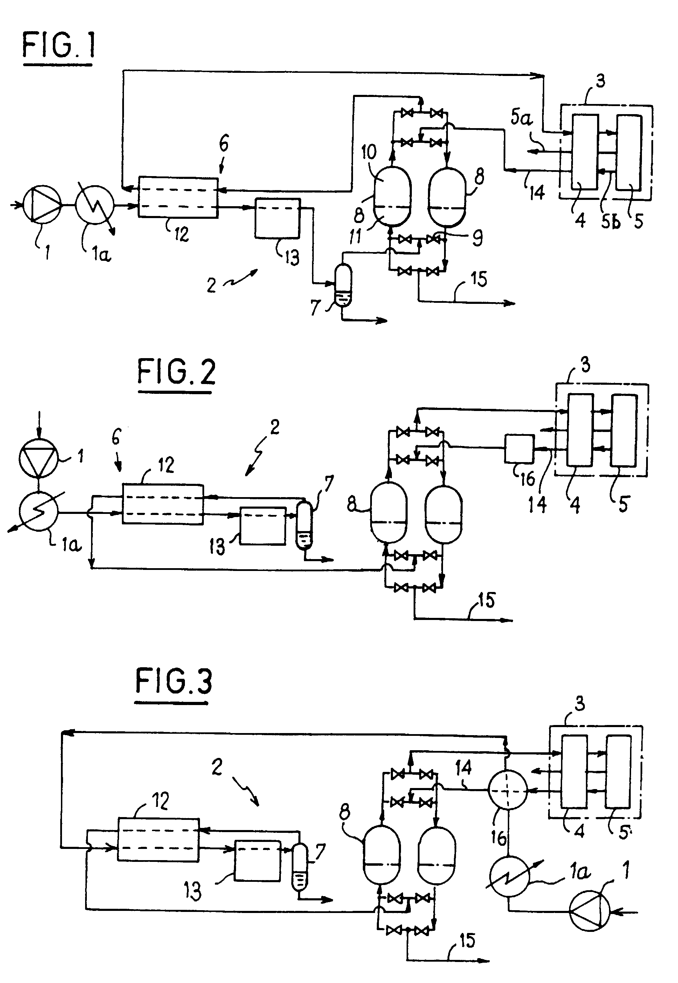

Des exemples de mise en oeuvre de l'invention vont maintenant être décrits en regard des dessins annexés, sur lesquels les figures 1 à 5 représentent schématiquement cinq installations de distillation d'air comportant des appareils de dessiccation-décarbonatation conformes à l'invention.

On voit sur chaque figure une installation de distillation d'air comprenant un compresseur d'air 1 équipé à sa sortie de son réfrigérant final 1a (réfrigérant d'eau ou aéroréfrigérant), un appareil de dessiccation-décarbonatation 2, et une boîte froide 3 comprenant une ligne d'échange thermique 4 et une colonne de distillation 5. Cette dernière délivre un gaz de production (oxygène gazeux et/ou azote gazeux) via une conduite - et un gaz de régénération, constitué par le gaz résiduaire de l'installation, à savoir de l'azote impur ou de l'air enrichi en oxygène, via une conduite 5b.

Dans chacun des exemples représentés, l'appareil 2 comprend des moyens 6 de refroidissement de l'air comprimé, typiquement entre 5 et 25 x 10⁵ Pa, un séparateur de phases 7 destiné à éliminer l'eau de condensation de l'air complètement refroidi, et deux bouteilles d'adsorption 8 montées en parallèle, avec un jeu de vannes 9 appropriées. Chaque bouteille 8 contient un lit 10 de tamis moléculaire de type 5A ou 13X, éventuellement précédé (vis-à-vis de l'adsorption) d'un lit d'alumine 11.

A la figure 1, les moyens de refroidissement 6 comprennent deux échangeurs de chaleur 12 et 13 disposés en série. L'air atmosphérique est comprimé par le compresseur 1 à une pression de l'ordre de 5 à 25 x 10⁵ Pa absolus, généralement de 5 à 12 x 10⁵ Pa, et sort de ce compresseur, après réfrigération en 1a, à une température de l'ordre de 45°C. Cet air est pré-refroidi dans l'échangeur 12, puis refroidi à la température d'adsorption TA, comprise entre +5 et +20°C, typiquement d'environ 10°C, dans l'échangeur 13, lequel est réfrigéré par exemple par un groupe frigorifique.

L'eau condensée est éliminée dans le séparateur 7 et l'air pénètre par le bas dans la bouteille 8 qui est en phase d'adsorption (celle de gauche sur la figure 1). Après épuration, l'air, dont la température s'est élevée de quelques °C du fait de la chaleur d'adsorption des impuretés, essentiellement de l'eau, traverse à contre-courant l'échangeur 12 et s'y échauffe jusqu'à 40°C environ. C'est cet air réchauffé qui pénètre dans la ligne d'échange thermique 4 de la boîte froide de l'installation.

Lorsque le front d'adsorption est proche de la sortie de la bouteille 8, cette bouteille passe en phase de régénération par manoeuvre des vannes 9.

La phase de régénération comprend une étape unique au cours de laquelle le gaz résiduaire de l'installation de distillation, réchauffé à contre-courant de l'air dans la ligne d'échange 4, sort de celle-ci vers 35°C via une conduite 14, et est introduit à contre-courant, à cette température, dans la bouteille 8, puis est évacué via une conduite 15.

Lorsque la régénération est terminée, la bouteille 8 est remise en phase d'adsorption, éventuellement après une phase de remise en pression. La durée d'un cycle adsorption/régénération est d'au moins 30 minutes, en pratique entre 1 et 4 heures.

Si le débit de gaz de régénération est suffisant, une température de régénération plus basse peut convenir, par exemple 25 à 30°C, ce qui est plus avantageux. Dans ce cas, l'échangeur la est dimensionné afin d'amener l'air comprimé à une température supérieure de quelques °C à cette température, soit 30 à 35°C, avant son entrée dans l'échangeur 12.

On a pu ainsi traiter des deux manières suivantes 150 Nm³/h d'air à 9 x 10⁵ Pa absolus, saturé en eau et contenant environ 400 vpm (parties par million en phase vapeur) de CO₂ :

| TA | Dg/Da | TR | t |
|---|---|---|---|
| 15°C | 60 % | 35°C | 1 h |
| 8°C | 30 % | 35°C | 2 h |

où TA désigne la température d'adsorption, Dg/Da le rapport du débit de gaz de régénération au débit d'air, TR la température de régénération et t la durée de chaque phase d'adsorption et de régénération.

On retrouve les mêmes éléments 1 à 15 dans le schéma de la figure 2, avec toutefois un agencement différent en ce qui concerne l'appareil d'épuration 2.

En effet, l'air sortant du compresseur 1, pré-refroidi vers 30°C dans l'échangeur 1a, est refroidi à une température intermédiaire de 15°C environ dans l'échangeur 12, puis refroidi jusqu'à 5 à 10°C dans l'échangeur 13.

Après élimination de l'eau de condensation dans le séparateur 7, l'air est réchauffé vers 25°C dans l'échangeur 12, puis est envoyé dans la bouteille 8 en phase d'adsorption.

Ainsi, l'adsorption s'effectue vers 25°C, mais avec de l'air non saturé en eau, ayant un point de rosée de 5 à 10°C. La chaleur d'adsorption n'est donc pas supérieure à ce qu'elle était dans le cas de la figure 1, et l'air épuré pénètre dans la ligne d'échange 4 vers 30°C. Par suite, le gaz de régénération sort de celle-ci vers 25°C, et la régénération de l'adsorbant s'effectue à une température de 35°C, grâce à un réchauffeur 16 disposé sur la conduite 14.

Ce réchauffement du gaz de régénération peut s'obtenir en mettant la conduite 14 en relation d'échange de chaleur avec l'air comprimé sortant du réfrigérant 1a, comme représenté à la figure 3, laquelle est, à part cette différence, identique à la figure 2.

Avec le schéma de la figure 3, on a pu traiter 130 Nm³/h d'air comprimé à 9 x 10⁵ Pa absolus, destiné à une installation de production d'azote gazeux fournissant 80 Nm³/h de gaz résiduaire (liquide riche vaporisé), dans les conditions suivantes :
- phase d'adsorption : point de rosée de l'air + 5°C, teneur en CO₂ voisine de 400 vpm température d'adsorption TA: 15°C ;
- phase de régénération : température de régénération TR : 30 à 35°C ;
- durée de chaque phase d'adsorption et de régénération : 1 H 30 mn.

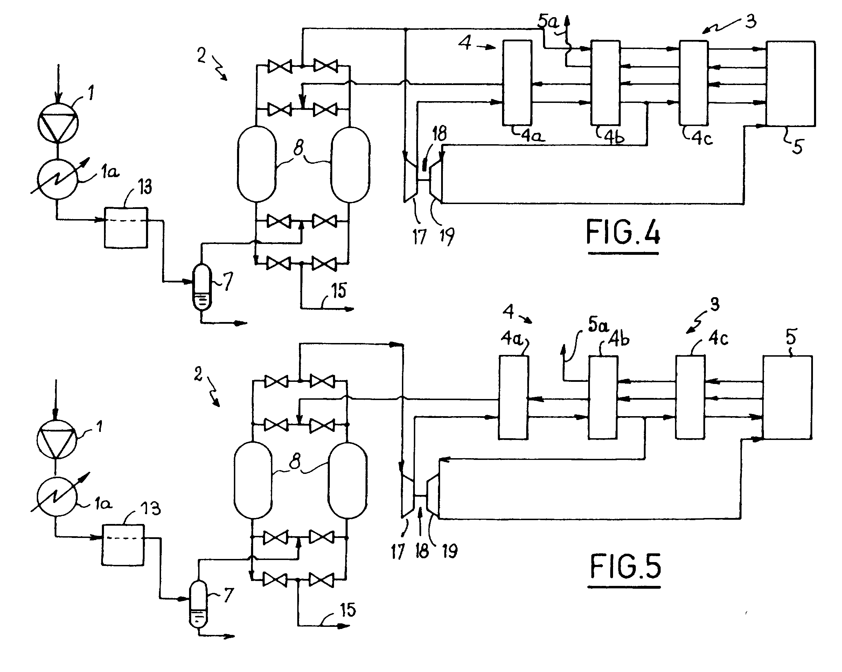

Les figures 4 et 5 illustrent une autre manière d'amener le gaz de régénération à la température de régénération TR désirée.

A la figure 4, l'air comprimé en 1, prérefroidi en 1a, refroidi à la température d'adsorption en 13 et épuré de l'eau liquide condensée en 7, est épuré par adsorption en 8. Une partie de l'air épuré est surpressé par un compresseur 17 d'un groupe moto-compresseur 18, puis traverse la ligne d'échange 4, laquelle comporte trois tronçons, chaud 4a, intermédiaire 4b et froid 4c. Le reste de l'air épuré traverse seulement les tronçons 4b et 4c. Entre les tronçons 4b et 4c, une fraction de l'air comprimé en 17 est prélevé et détendu dans la turbine 19 du groupe 18 puis est envoyé dans la colonne 5.

Dans cet exemple, la turbine 19, qui sert à la production frigorifique de l'installation, entraîne le compresseur 17, et ce dernier échauffe à une température légèrement supérieure à la température de régénération la fraction d'air appropriée. Ainsi, le gaz résiduaire de la colonne 5 est chauffé à la température de régénération au bout chaud de la ligne d'échange.

Comme indiqué sur la figure 4, la conduite de production 5a peut ne traverser que les tronçons 4c et 4b et sortir ainsi de la ligne d'échange au voisinage de la température ambiante.

A titre d'exemple numérique, on peut avoir :
- pression d'adsorption : 6 x 10⁵ Pa absolus ;
- température d'adsorption TA : +15°C ;
- température de l'air épuré : +20°C ;
- température de l'air surpressé : +35°C ;
- pression de l'air surpressé : 7 x 10⁵ Pa;
- pression de l'air détendu : 1 x 10⁵ Pa;
- température de régénération TR : + 30° C ;
- durée du cycle : environ 1 heure.

La figure 5 correspond au cas limite où la totalité de l'air épuré est surpressé en 17. A tous autres égards, elle est identique à la figure 4.

## Revendications

1. Procédé de dessiccation-décarbonatation d'air atmosphérique par adsorption avant son entrée dans la boîte froide (3) d'une installation de distillation d'air, du type dans lequel l'air comprimé est refroidi à une température d'adsorption (TA) et épuré par adsorption par passage dans un premier sens à travers une masse d'adsorbant (8), un gaz résiduaire provenant de l'installation de distillation à une température de régénération (TR) traversant ensuite la masse d'adsorbant en sens opposé pour la régénérer, après quoi la masse d'adsorbant est remise en phase d'adsorption, le gaz résiduaire utilisé pour la régénération étant chauffé, pendant toute la régénération, à une température de régénération (TR) sensiblement constante modérée, supérieure à la température de l'air entrant dans la masse d'adsorbant par échange de chaleur (4, 4a, 16), la différence entre la température de régénération (TR) et la température d'adsorption (TA) n'excédant pas 50 °C, la durée d'un cycle adsorption/régénération étant au moins égale à 30 minutes, et l'air épuré sortant de la masse d'adsorbant étant à une température inférieure à la température de régénération (TR).

2. Procédé selon la revendication 1 caractérisé en ce que l'air épuré est réchauffé jusqu'à une température légèrement supérieure à la température de régénération (TR) avant son entrée dans la boîte froide.

3. Procédé selon la revendication 2, caractérisé en ce que la réchauffage est réalisé par échange de chaleur avec l'air sortant du compresseur (1) de l'installation.

4. Procédé selon la revendication 2, caractérisé en ce que le réchauffage est réalisé par surpression.

5. Procédé selon la revendication 1, caractérisé en ce que, après son refroidissement, l'air comprimé, partiellement épuré de son eau par ce refroidissement, est réchauffé avant son entrée dans la masse d'adsorbant (8).

6. Procédé selon la revendication 5, caractérisé en ce que le gaz résiduaire est réchauffé (en 16) avant son entrée dans la masse d'adsorbant (8).

7. Appareil de dessiccation-décarbonatation d'air atmosphérique par adsorption avant son entrée dans une boîte froide (3) d'une installation de distillation d'air, comprenant une masse d'adsorbant (8) pour épuration de l'air, comprimé par un compresseur (1) et refroidi à une température d'adsorption (TA), qui passe à travers ladite masse (8) dans un premier sens, ladite masse (8) étant régénérable par un gaz résiduaire de l'installation de distillation qui traverse ladite masse (8) en sens opposé, caractérisé en ce qu'il comprend un premier (12) et un second (4) moyens d'échange de chaleur mettant en relation d'échange thermique l'air épuré par la masse (8) avec l'air sortant du compresseur puis avec le gaz résiduaire avant son entrée dans la masse (8), chauffant ainsi le gaz résiduaire à une température de régénération (TR) supérieure à la température d'adsorption (TA), la différence entre la température de régénération et la température dadsorption (TA) n'excédant pas 50 °C.

8. Appareil selon la revendication 7, modifié en ce que le premier moyen d'échange de chaleur (12) est remplacé par un échangeur de chaleur (16) mettant en relation d'échange thermique l'air comprimé et le gaz résiduaire, pour chauffer le gaz résiduaire à une température de régénération (TR) supérieure à la température d'adsorption (TA), la différence entre la température de régénération (TR) et la température d'adsorption (TA) n'excédant pas à 50 °C.

9. Appareil selon la revendication 8, caractérisé en ce qu'il comprend en série, avec ledit échangeur de chaleur (16), un échangeur de chaleur auxiliaire (12) mettant en relation d'échange thermique l'air comprimé complètement refroidi et l'air comprimé non encore complètement refroidi.

10. Appareil selon la revendication 7, modifié en ce que le premier moyen d'échange de chaleur (12) est remplacé par un compresseur (17) qui surpresse une partie au moins de l'air épuré par la masse (8) avant son entrée dans la boîte froide, le compresseur (17) et un tronçon de ligne d'échange (4a) de la boîte froide (3) servant à chauffer le gaz résiduaire à une température de régénération (TA), la différence entre la température de régénération (TR) et la température d'adsorption (TA) n'excédant pas 50 °C.

## Claims

1. Process for the drying and decarbonation of atmospheric air by adsorption, before it enters the cold box (3) of an air distillation plant, of the type in which the compressed air is cooled to an adsorption temperature (AT) and purified by adsorption by being passed, in a first direction, through a mass of adsorbent (8), a residual gas from the distillation plant at a regeneration temperature (RT) next passing through the mass of adsorbent in the opposite direction in order to regenerate it, after which the mass of adsorbent is returned to the adsorption phase, the residual gas used for the regeneration being heated, by heat exchange (4, 4a, 16), throughout the whole of the regeneration, to a substantially constant moderate regeneration temperature (RT), higher than the temperature of the air entering the mass of adsorbent, the difference between the regeneration temperature (RT) and the adsorption temperature (AT) not exceeding 50°C, the duration of an adsorption/regeneration cycle being at least equal to 30 minutes, and the purified air leaving the mass of adsorbent being at a temperature below the regeneration temperature.

2. Process according to Claim 1, characterised in that the purified air is heated to a temperature slightly above the regeneration temperature (RT) before it enters the cold box.

3. Process according to Claim 2, characterised in that the heating is carried out by heat exchange with the air coming out of the compressor (1) of the plant.

4. Process according to Claim 2, characterised in that the heating is carried out by pressurisation.

5. Process according to Claim 1, characterised in that, after being cooled, the compressed air, which has been partially purified of its water by this cooling, is heated before entering the mass of adsorbent (8).

6. Process according to Claim 5, characterised in that the residual gas is heated (in 16) before entering the mass of adsorbent (8).

7. Apparatus for the drying and decarbonation of atmospheric air by adsorption before it enters a cold box (3) of an air distillation plant comprising a mass of adsorbent (8) for purifying the air, compressed by a compressor (1) and cooled to an adsorption temperature (AT), which passes through the said mass (8) in a first direction, the said mass (8) being able to be regenerated by a residual gas from the distillation plant which passes through the said mass (8) in the opposite direction, characterised in that it comprises a first (12) and second (4) heat exchange means putting in a heat exchange relationship the air purified by the mass (8) with the air leaving the compressor and then with the residual gas before it enters the mass (8), thus heating the residual gas to a regeneration temperature (RT) higher than the adsorption temperature (AT), the difference between the regeneration temperature and the adsorption temperature (AT) not exceeding 50°C.

8. Apparatus according to Claim 7, modified in that the first heat exchange means (12) is replaced by a heat exchanger (16), putting the compressed air and the residual gas in a heat exchange relationship, in order to heat the residual gas to a regeneration temperature (RT) higher than the adsorption temperature (AT), the difference between the regeneration temperature (RT) and the adsorption temperature (AT) not exceeding 50°C.

9. Apparatus according to Claim 8, characterised in that it comprises, in series with the said heat exchanger (16), an auxiliary heat exchanger (12) putting the completely cooled compressed air and the compressed air which has not yet been completely cooled in a heat exchange relationship.

10. Apparatus according to Claim 7, modified in that the first heat exchange means (12) is replaced by a compressor (17) which pressurises at least some of the air purified by the mass (8) before it enters the cold box, the compressor (17) and a section of the exchange line (4a) of the cold box (3) serving to heat the residual gas to a regeneration temperature (RT), the difference between the regeneration temperature (RT) and the adsorption temperature (AT) not exceeding 50°C.

## Patentansprüche

1. Verfahren zur Trocknung und Kohlensäureentziehung von bzw. aus Atmosphärenluft durch Adsorption, bevor die Luft in die Kältekammer (3) einer Luftzerlegungsanlage eintritt, bei dem die verdichtete Luft auf eine Adsorptionstemperatur (TA) abgekühlt und durch Adsorption beim Durchströmen einer Adsorptionsmittelmasse (8) in einer ersten Richtung gereinigt wird, wobei ein Restgas der Zerlegungsanlage daraufhin die Adsorptionsmittelmasse bei einer Regenerationstemperatur (TR) in entgegengesetzter Richtung durchströmt, um die Adsorptionsmasse zu regenerieren, woraufhin die Adsorptionsmittelmasse wieder in den Adsorptionszustand versetzt wird, wobei das zur Regenerierung verwendete Restgas während der gesamten Regenerierung durch Wärmeaustausch (4, 4a, 16) auf eine im wesentlichen konstante mäßige Regenerierungstemperatur (TR) erwärmt wird, die höher ist als die Temperatur der in die Adsorptionsmittelmasse einströmenden Luft, die Differenz zwischen der Regenerierungstemperatur (TR) und der Adsorptionstemperatur (TA) 50°C nicht übersteigt, die Dauer des Adsorptions/Regenerierungszyklus zumindest 30 Minuten beträgt und die gereinigte, aus der Adsorptionsmittelmasse austretende Luft eine Temperatur hat, die niedriger als die Regenerierungstemperatur (TR') ist.

2. Verfahren nach Anspruch 1, dadurch gekennzeichnet, daß die gereinigte Luft bis auf eine Temperatur erwärmt wird, die geringfügig höher ist als die Regenerierungstemperatur (TR) bevor sie in die Kältekammer einströmt.

3. Verfahren nach Anspruch 2, dadurch gekennzeichnet, daß die Wiedererwärmung durch Wärmeaustausch mit der Luft realisiert wird, die aus dem Verdichter (1) der Anlage austritt.

4. Verfahren nach Anspruch 2, dadurch gekennzeichnet, daß die Wiedererwärmung durch Überdruck erzeugt wird.

5. Verfahren nach Anspruch 1, dadurch gekennzeichnet, daß die verdichtete Luft nach ihrer Abkühlung, durch diese Abkühlung teilweise von ihrem Wasser gereinigt, vor ihrem Eintritt in die Adsorptionsmittelmasse (8) wiedererwärmt wird.

6. Verfahren nach Anspruch 5, dadurch gekennzeicnnet, daß das Restgas vor seinem Eintritt in die Adsorptionsmittelmasse (8) wiedererwärmt wird.

7. Vorrichtung zur Trocknung und Kohlensäureentziehung von bzw. aus Atmosphärenluft durch Adsorption vor deren Eintritt in eine Kältekammer (3) einer Luftzerlegungsanlage, die eine Adsorptionsmittelmasse (8) zur Reinigung der Luft umfaßt, die mittels eines Verdichters (1) verdichtet und auf eine Adsorptionstemperatur (TA) gekühlt wird und die Masse (8) in einer ersten Richtung durchströmt, wobei die Masse (8) durch ein Restgas der Zerlegungsanlage regenerierbar ist, das die Masse (8) in entgegengesetzter Richtung durchströmt, dadurch gekennzeichnet, daß sie ein erstes (12) und ein zweites (4) Wärmeaustauschmittel umfaßt, welche die durch die Masse (8) gereinigte Luft mit der aus dem Verdichter austretenden Luft und daraufhin mit dem Restgas vor seinem Eintritt in die Masse (8) in Wärneaustauschbeziehung bringen, wodurch das Restgas auf eine Regenerierungstemperatur (TR) erwärmt wird, die höher ist als die Adsorptionstemperatur (TA), wobei die Differenz zwischen der Regenerierungstemperatur und Adsorptionstemperatur (TA) 50°C nicht übersteigt.

8. Vorrichtung nach Anspruch 7, die dadurch modifiziert ist, daß die Wärmeaustauschereinrichtung (4, 12) durch einen ersten Wärmeaustauscher (16) ersetzt ist, der die verdichtete Luft und das Restgas in Wärmeaustauschbeziehung bringt, um das Restgas auf eine Regenerierungstemperatur (TR) zu erwärmen, die höher ist als die Adsorptionstemperatur (TA), wobei die Differenz zwischen der Regenerierungstemperatur (TR) und der Adsorptionstemperatur (TA) 50°C nicht übersteigt.

9. Vorrichtung nach Anspruch 8, dadurch gekennzeichnet, daß sie in Reihe mit dem ersten Wärmeaustauscher (16) einen Zusatzwärmeaustauscher (12) umfaßt, der die vollständig abgekühlte, verdichtete Luft und die noch nicht vollständig abgekühlte, verdichtete Luft in Wärmeaustauschbeziehung bringt.

10. Vorrichtung nach Anspruch 7, die dadurch modifiziert ist, daß die Wärmeaustauschereinrichtung (4, 12) durch einen Verdichter (17) ersetzt ist, der einen Teil von zumindest der durch die Masse (8) gereinigten Luft auf Überdruck bringt, bevor sie in die Kühlkammer eintritt, wobei der Verdichter (17) und ein Austauscherteil (4a) der Kältekammer (3) dazu dienen, das Restgas auf eine Regenerierungstemperatur (TR) zu erwärmen, die höher ist als die Adsorptionstemperatur (TA), wobei die Differenz zwischen der Regenerierungstemperatur (TR) und der Adsorptionstemperatur (TA) 50°C nicht übersteigt.
